# EUROPEAN PATENT APPLICATION

(11) **EP 1 599 000 A1**
(43) Date of publication of application: **23.11.2005**
(21) Application number: 05300378.6
(22) Date of filing: 16.05.2005
(51) Int. Cl.: H04L 12/56

(54) **Provisioning of cross domain telecommunication services through dynamic label differentiation**

(30) Priority: 20.05.2004 CA 2468122; 30.07.2004 US 909194
(71) Applicant: ALCATEL, 75008 Paris (FR)
(72) Inventor: Cuervo, Fernando, Ottawa, Ontario K0A 1T0 (CA); Guingo, Pierrick Jacques, Ottawa, Ontario K2H 9K4 (CA)
(74) Representative: Hervouet, Sylvie

(57) **Abstract**

Apparatus and method are provided for distributing labels between domains of different technologies or administrations, thereby facilitating establishment of cross-domain services. Each label includes a Service label having end-to-end consistency, and a Local label used by each domain in accordance with the domain's underlying technology.

## Description

### Cross-reference to other applications

This application claims priority from Canadian Patent Application 2,468,122, entitled "Provisioning of Cross Domain Telecommunication Services Through Dynamic Label Differentiation" and filed on May 20, 2004.

### Field of the invention

The invention relates to the use of labels within telecommunication networks, and more particularly to the use of labels in network-services in multi-domain networks.

### Background of the invention

Configuration and operation of cross-domain services is a major issue for network administrators and network-service providers. Whether "cross-domain" means across domains having different administrators, technologies, or multi-vendor network equipment, providers are faced with a number of ineffectual methods of exchanging network-service information between disparate systems.

Manipulation of labels is the central concept of data communications. This is a pervasive concept throughout X.25, MPLS, and VLAN switching, to name but a few examples. Labels are also used in circuit switching, where the job of a switch could be thought of as implementing a mapping between labels that identify physical or virtual circuits (as is done in SONET and ATM). When traffic is delivered on the data-path between the two domains, traffic must use transport labeling to allow the traffic to be uniquely identified, and separated/ aggregated, at the boundary of each domain. The technology used determines the label types to be used. Examples of labels are VLAN Identifiers, VPVCIs, MPLS labels, and SONET VC Identifiers. Coordination of label use between domains is necessary to provide an end-to-end service.

There does not currently exist a generalized management mechanism that can be used by any two (or more) domains for supporting automated provisioning of an end-to-end service. G-MPLS provides perhaps the closest prior art to the required solution, as it provides a framework of reference for label switching over a packet infrastructure. Although G-MPLS is a signaling approach, it can be viewed as offering some level of automation to address the difficulties of cross-domain service configuration. The foundation of G-MPLS is a generalization of two signaling protocols (RSVP and LDP), for setting paths on technologies such as ATM, DWDM, or SONET. A protocol such as LDP distributes labels in order to create a path by mapping network-layer routing information directly to data-link layer paths. A path defined in this way creates a routing efficiency since all incoming labels for a class of packets can be mapped rapidly to the outgoing label for the same class of packets. G-MPLS protocols therefore support IP services well and run in-path, because of the presence of the distributed IP control plane in every router.

However, G-MPLS is typically used to solve a technology problem as a signaling mechanism. The specifications are fairly rigid and any innovation would be difficult. For instance, the Optical Interoperability Forum (OIF) provides a UNI specification that is focused on IPv4 over SONET solutions. The problem is further compounded by the use of two different protocols, RSVP and LDP, to perform the signaling function. Use of G-MPLS would require that each of two OIF compliant domains can also inter-operate correctly using both protocols within G-MPLS.

The effectiveness of G-MPLS is further reduced as packet infrastructures are extended to support other key services, such as Ethernet services. This is because the service reachability information is no longer supported by routing protocols. Therefore, when a network uses a variety of transports (such as DSL, Metro Ethernet, SONET, and DWDM) to realize end-to-end services (including IP services, Ethernet services, or QoS pipes), the G-MPLS approach lacks the flexibility to adapt to new service information.

How the industry has dealt with these deficiencies is exemplified in the Martini Pseudo-wire, VPLS, and IP-VPN provisioning. Martini uses and LDP based signaling in which the packets to be recognized as a payload in the pseudo-wire are identified by a Forwarding Equivalence Class based on the physical and virtual sub-interface descriptions. VPLS is supported by two different methods, one being based on LDP signaling, the other on BGP. RFC-2547 compliant IP-VPNs rely on BGP methods in spite of having an MPLS based infrastructure. Clearly, this fragmentation of solutions is not conducive to interoperability. It also requires per service management procedures.

A distributed mechanism for distributing network-service labeling across domains of different technologies or administrations would permit end-to-end coordination of cross-domain services, without requiring a costly and inflexible umbrella management system.

### Summary of the invention

In accordance with one aspect of the invention, a method is provided for managing labels in end-to-end cross-domain network services, the network having a first domain and at least one neighbouring domain differing from the first domain in at least one of administrator, technology, and vendor. A first label is generated within the first domain, the first label having a global component and a local component. The first label is associated with an end-to-end cross-domain network service. The first label is transmitted to a second domain which is one of the neighbouring domains through which the network service is to be routed. Within the second domain, a second label is generated from the first label. The second label is associated with the network service and has a global component identical to that of the first label but has a local component particular to the second domain.

The methods may be stored as instructions on a computer-readable medium, to be executed by a computer processor such as at a network element. Apparatus is also provided for implementing the methods, such as a network element or a management layer within a domain.

The method and apparatus of the present invention allow segments to be established between domains for cross-domain services. Service Connection Points at domain boundaries can be defined dynamically, where technologies do not have the control plane capabilities of IP which are the only true end-to-end capabilities existing today to dynamically set a service over domains having diverse transport media. A variety of services that include both existing and emerging services can be provisioned using the mechanism of the invention, since the interpretation of labels and the service they provide are dynamically defined by the label classification and a supporting Service Level Specification. The end-to-end service provisioning can include any number of technologies.

The label distribution mechanism of the invention avoids the pre-definition of a Forward Equivalence Class, as used by G-MPLS, by providing dynamic methods to specify a label stack that mixes service and technology labels. The accompanying Service Level Specification further refines the definition of the Service labels. The mechanism of the invention also resolves the G-MPLS disconnect between the signaling layer and the link management protocol. These are unified in a single management procedure where a label request is always relative to the adjacency service. The adjacency service is referred to by the label set-up mechanism, thereby permitting operators to identify the point at which the labels that are exchanged have significance. The adjacency service also includes a definition that specifies the types of network-services for which labels can be negotiated.

### Brief description of the drawings

The features and advantages of the invention will become more apparent from the following detailed description of the preferred embodiment(s) with reference to the attached figures, wherein:
FIG. 1 is a diagram of an example domain in which the invention is implemented according to one embodiment of the invention;
FIG. 2 is a diagram of an example multi-domain network according to one embodiment of the invention; and
FIG. 3 is a diagram of an example service implemented across the multi-domain network of FIG. 2.

It will be noted that in the attached figures, like features bear similar labels.

### Detailed description of the embodiments

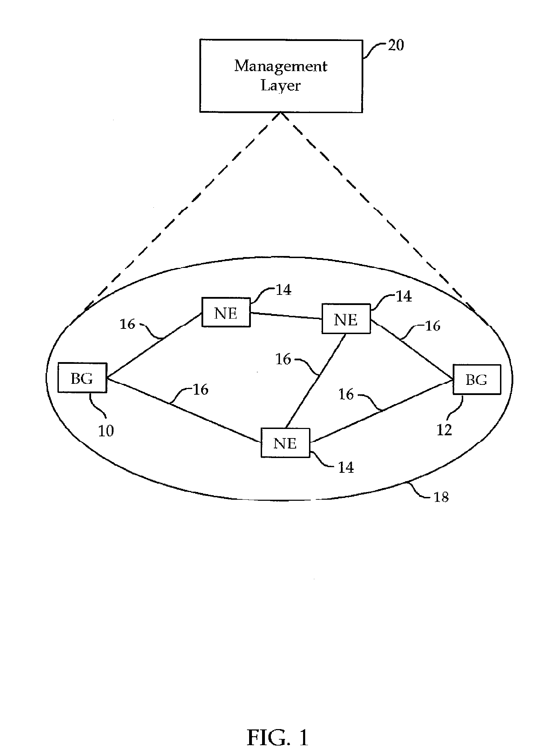

Referring to FIG. 1, an example of a telecommunication domain is shown. The domain includes a first border gateway 10, a second border gateway 12, and a plurality of interior network elements 14. Collectively, the first border gateway 10, the second border gateway 12, and the plurality of interior network elements 14 are referred to as network elements 18 of the domain. The network elements of the domain are variously interconnected by communication links 16. The domain shown in FIG. 1 is for example purposes only. More generally, the domain includes a plurality of network elements, at least two of which are border gateways. The border gateways provide communication access to devices outside the domain, such as border gateways of other domains or end user devices.

The domain also includes a management layer 20. The management layer 20 comprises a plurality of components, including a Service Request Manager (SRM). The SRM is preferably in the form of software instructions located on one or more of the network elements of the domain, in particular on the border gateways as it is the border gateways which communicate directly with other domains according to the invention. Alternatively, the SRM may be located on separate workstations communicating with the network elements.

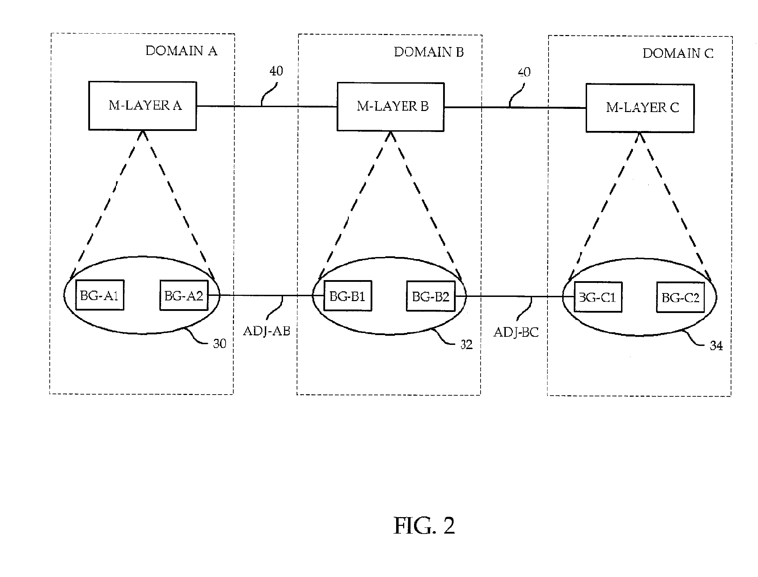

Referring to FIG. 2, an example multi-domain network is shown. The multi-domain network includes a first domain A, a second domain B, and a third domain C. Each of these domains is similar in concept to the example domain described above with reference to FIG. 1, each domain having a plurality of internal network elements (not shown in FIG. 2), border gateways, and a management layer. The first domain A has a set of network elements 30, including a first border gateway BG-A1 and second border gateway BG-A2, and a management layer M-A. The second domain B has a set of network elements 32, including a first border gateway BG-B1 and second border gateway BG-B2, and a management layer M-B. The third domain C has a set of network elements 34, including a first border gateway BG-C1 and second border gateway BG-C2, and a management layer M-C. The domains A, B, and C are distinct in at least one of technology employed and administration. For example, domain A may be an ATM-based network offering Ethernet transport services over ATM circuits, domain B may be a SONET-based network offering Ethernet transport services using SONET frame encapsulation, and domain C may be a SONET-based network offering the same type of Ethernet transport services but under a different administrative control than that of domain B, and perhaps implemented using equipment from a different vendor than that of domain B.

The management layers in each of the domains communicate with each other over management layer communication channels 40. The management layer communication channels may be in-path or out-of-path.

An adjacency ADJ-AB exists between the second border gateway BG-A2 of the first domain A and the first border gateway BG-B1 of the second domain B. An adjacency ADJ-BC exists between the second border gateway BG-B2 of the second domain B and the first border gateway BG-C1 of the third domain C. Each adjacency is defined as the physical connection between the respective border gateways, a set of services supported across the physical connection, and policies associated with each of the services within the set of supported services. The physical connection may be of any type, such as an Ethernet link connection.

The multi-domain network described with reference to FIG. 2 is for example purposes only. More generally, there are a plurality of domains, each distinct in its combination of administration, network service, and implementation technology, within the multi-domain network. Each domain has a management layer which communicates with the management layer of the other domains via management layer communication channels. Each domain has border gateways, and adjacencies exist between border gateways of neighbouring domains.

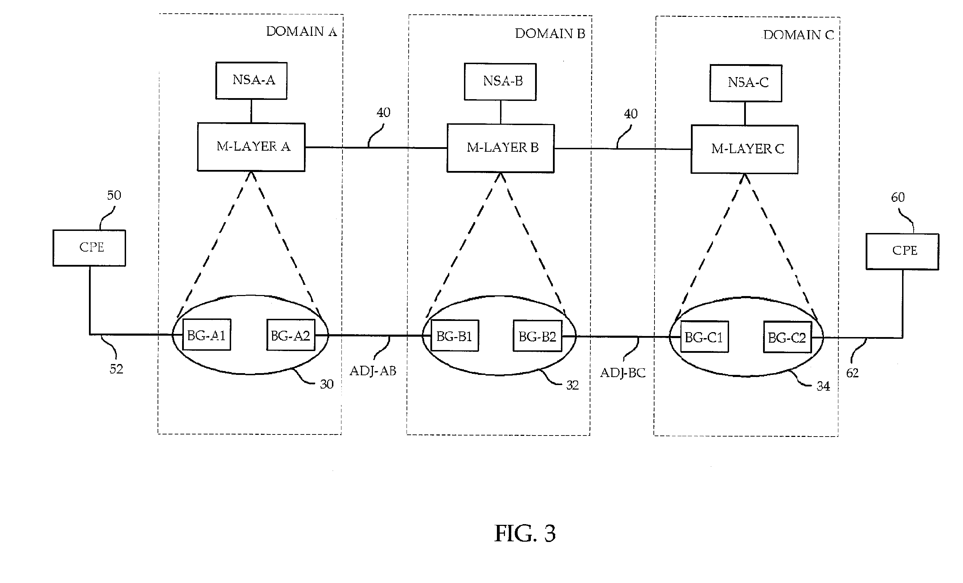

Referring to FIG. 3, an example point-to-point service is shown across the multi-domain network described with reference to FIG. 2. A first end user 50 communicates with the first border gateway BG-A1 of the first domain A through a first Service Access Point (SAP) 52. A second end user 60 communicates with the second border gateway BG-C2 of the third domain C through a second SAP 62. The service is carried over an end-to-end link (which may be connection-oriented or connectionless) from the first end user 50, through the first SAP 52, through the network elements 30 of the first domain A, over the adjacency ADJ-AB between the first domain A and the second domain B, through the network elements 32 of the second domain B, over the adjacency ADJ-BC between the second domain B and the third domain C, through the network elements 34 of the third domain C, and through the second SAP 62 to the second end user 60.

Each SRM contains a transaction and protocol engine that coordinates service segment establishment in the different domains across which a cross-domain service is to be established, and includes a label distribution mechanism. The SRM requests cross-domain services by implementing an open mechanism independent of the technology that is connecting the SRM's domain to an adjacent domain through an adjacency. The SRM communicates with an SRM of an adjacent domain using the network management communication channels 40. The SRM also has flexible timers to adapt to differing management timescales of neighbouring domains, and provides both soft-state and hard-state types of notifications to communicate the completion of states of service requests.

When a service is to be established, the SRM of each domain establishes segments internally between the border gateways of the domain, and to a neighbouring domain across the adjacency between the two domains, the neighbouring domain being the domain through which the service is to be routed. In so doing, the SRM assigns a label to the service using a dynamic label differentiation mechanism. This label has at least two components, a global component and a local component. The global component identifies the service uniquely across all domains. The local component identifies the service uniquely within the domain of the SRM assigning the label. The SRM passes this labeling information to the SRM of the neighbouring domain.

The SRM of the neighbouring domain preserves the global component of the label so as to maintain the unique identification of the service, but may replace or augment the local component of the label with new values appropriate to the technology used within its own domain. The SRM clearly differentiates to its neighbouring domains the labels as global or local. Global and local labels can be expressed as complex data structures (such as a sequence). The rules for uses of local labels are defined for each adjacency service, and are agreed upon by the domains that meet at each adjacency service. The SRM of the neighbouring domain passes the label information to the SRM of the next domain, and the SRMs of successive domains along the route act similarly to complete the segments to the final Service Access Point.

As stated above, the label space is divided into Service Labels (the global component) and Local Labels (the local component). The Service Labels are preserved by the domain processing the service request. The Service Labels are assigned by service entities somewhere within the network, and are respected throughout the multi-domain network since they have end-to-end significance. Service Labels are accompanied by a Service Type and a Service Level Specification that fully qualifies the use of the label. This allows the treatment of the Service Label to be fully specified so that the label can be applied a service meaning dynamically. The Local Labels are used by individual domains to separate traffic.

The allocation and negotiation of labels can be performed in a number of ways, depending on the management style and service ownership. End-to-end provisioning can occur from one end towards the other, as described above, respecting different label allocation agreements between operators or dynamic negotiation. Alternatively, provisioning may start from any arbitrary domain (such as a core domain) towards the end points (the access domains). Since the end-points are not defined by a Forwarding Equivalence Class but rather by a Service Level Specification, the Service Labels may be assigned after local labels as long as the Service Labels are assigned consistently on an end-to-end basis.

Domains interact using a peer-to-peer service view, instead of using the common view of tunneling over intermediate domains. This simplifies cross-domain management since Local Labels are used for traffic separation only, and do not have explicit cross-domain significance of a transport service. Internally, each domain can use its own tunneling technique, which remain unexposed to other domains.

The label distribution mechanism may be implemented in either an out-of-band mode or in an in-path mode. However, the out-of-path implementation is preferred in a management context, since each domain can implement supporting fault detection, localization, and mitigation functions because the association between managers or controllers that implement the mechanism do not share fate with the data-path. An out-of-path implementation also favours the inter-working between technology domains that do not have a common distributed control plane, and provides flexibility for domain owners to define the management and control inter-working according to different practical constraints. For instance, labels can be exchanged over a common external IP network or over a designated and diverse physical interface at the domain boundary.

The label distribution mechanism carried out by the SRM makes an explicit link between the labels and the boundary between the two domains. This boundary is called the Adjacency Service. The combined use of the label and the Adjacency Service define a Service Connection Point. This results in the label always being relative to the Adjacency Service, thereby facilitating correlation of the service to the interfaces, a feature that is particularly useful when the labels are communicated in an out-of-path mode. This implementation provides the management layer with information that is useful to support network-service assurance functionality. In contrast, the signaling protocol and the link management protocol in GMPLS do not provide any comparable information.

The mechanism for providing the label service may be implemented in an architecture for managing cross-domain services, such as that taught by Canadian Patent Application 2,467,939, entitled "Architecture for Configuration and Management of Cross-Domain Network Services", filed on May 20, 2004 and assigned to the same assignee as that of the present application.

The embodiments presented are exemplary only and persons skilled in the art would appreciate that variations to the embodiments described above may be made without departing from the spirit of the invention. The scope of the invention is solely defined by the appended claims.

## Claims

1. A method of managing labels in end-to-end cross-domain network services within a network, the network comprising a first domain and at least one neighbouring domain differing from the first domain in at least one of administrator, technology, or vendor, the method comprising:
generating a first label within the first domain, the first label having a global component and a local component;
associating the first label with an end-to-end cross-domain network service;
transmitting the first label to a second domain, the second domain being one of the at least one neighbouring domain, through which the network service is to be routed; and
within the second domain, generating from the first label a second label to be associated with the network service, the second label having the same global component as that of the first label and having a local component particular to the second domain.

2. The method of claim 1 wherein the first domain and the second domain are physically connected through an adjacency service, and wherein the first label and the second label are associated with the adjacency service.

3. The method of claim 2 further comprising transmitting an identification of the adjacency service when transmitting the first label to the second domain, and wherein generating a second label comprises generating a second label having a local component associated with the adjacency service and which is derived from the first label by the second domain by preservation, replacement, augmentation, or deletion.

4. A network element within a first domain of a network, the network including at least one other domain differing from the first domain in at least one of administrator, technology, and vendor, at least one of the other domain being a peer domain of the first domain, the network element comprising:
means for generating a first label, the first label having a global component and a local component;
means for associating the first label with a end-to-end cross-domain network service;
means for transmitting the first label to the peer domain in the event that the network service is to be routed through the peer domain;
means for receiving a second label from the peer domain; and
means for generating a third label upon receipt of a second label from the peer domain, the third label having a global component identical to a global component of the second label.

5. The network element of claim 4 wherein the first domain and the second domain are connected via an adjacency service, and wherein each label is associated with the adjacency service.

6. A network element within a first domain of a network, the network including at least one other domain differing from the first domain in at least one of administrator, technology, and vendor, at least one of the other domain being a peer domain of the first domain, the network element comprising:
means for receiving a first label from the peer domain, the first label being associated with an end-to-end cross-domain service and having a global component; and
means for generating a second label, the second label having a global component identical to the global component of the first label and having a local component which is derived from the first label by the second domain by preservation, replacement, augmentation, or deletion.

7. A computer-readable medium storing instructions for use within a first domain of a network, the network including at least one other domain differing from the first domain in at least one of administrator, technology, and vendor, at least one of the other domain being a peer domain of the first domain, the instructions comprising:
instructions for receiving a first label from the peer domain, the first label being associated with an end-to-end cross-domain service and having a global component; and
instructions for generating a second label, the second label having a global component identical to the global component of the first label and having a local component which is derived from the first label by the second domain by preservation, replacement, augmentation, or deletion.
